(19)

Europäisches Patentamt
European Patent Office
Office européen des brevets

(11) **EP 3 157 244 A1**

(12) **EUROPEAN PATENT APPLICATION**

(43) Date of publication:
19.04.2017 Bulletin 2017/16

(51) Int Cl.:
*H04N 5/225* (2006.01)    *H04N 5/238* (2006.01)
*G02B 3/00* (2006.01)

(21) Application number: 15306658.4

(22) Date of filing: 16.10.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **VANDAME, BENOIT**
**35576 CESSON SEVIGNE CEDEX (FR)**
• **DOYEN, DIDIER**
**35576 CESSON SEVIGNE CEDEX (FR)**
• **THIEBAUD, SYLVAIN**
**35576 CESSON SEVIGNE CEDEX (FR)**

(74) Representative: **Huchet, Anne**
**TECHNICOLOR**
**1-5, rue Jeanne d'Arc**
**92130 Issy-les-Moulineaux (FR)**

(54) **PLENOPTIC CAMERA AND METHOD OF CONTROLLING THE OPENING OF THE DIAPHRAGM**

(57)     A plenoptic camera (1) comprising a camera lens (10), a microlens array (11) and a photosensors array (13), the microlens array (11) comprising a plurality of cylindrical microlenses (111, 112, 11n) extending along a longitudinal axis. To control the light reaching the photosensors array, the camera lens (10) comprises a diaphragm (100), an aperture of the diaphragm (100) being constant according to a first axis (31) perpendicular to the longitudinal axis (20) and varying according to a second axis (32) perpendicular to the first axis (31).

Fig 1

EP 3 157 244 A1

## Description

### 1. Technical domain

The present disclosure relates to the domain of plenoptic camera and more specifically to the diaphragm of the optical assembly for a plenoptic camera.

### 2. Background

A plenoptic camera, also called light-field camera, may be used to acquire different views of a same scene. To obtain the different views, a raw image (comprising the data collected by a photosensor array of the plenoptic camera) is demosaiced and de-multiplexed. The demosaicing enables to recover a full color raw image, i.e. to recover full color information (for example RGB information, RGB standing for "Red", "Green" and "Blue") for the pixels of the raw image while the raw image acquired with the plenoptic camera associates only one color component (R, G or B for example) with each pixel. The demultiplexing performed after the demosaicing enables to recover the different views of the scene, i.e. to group the pixels of the demosaiced raw image according to the view they belong to.

An iris diaphragm coupled with the main lens of the plenoptic camera is used to control the amount of light reaching the photosensor array (in conjunction with the exposure time) as well as the depth of field. The opening/aperture of the iris diaphragm is usually adjusted by movable blades, for example 8 or 9 blades. Reducing the size of the aperture of the iris diaphragm means that the amount of light passing through the iris diaphragm (and thus reaching the photosensors array) is reduced as peripheral light beams are blocked. In case of plenoptic cameras, blocking peripheral light beams means masking some of the views.

### 3. Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a plenoptic camera comprising a lens unit, a microlens array and a photosensors array, the microlens array comprising a plurality of cylindrical microlenses extending along a longitudinal axis, the lens unit comprising a camera lens.

The lens unit further lens comprises a diaphragm, an aperture of the diaphragm being constant according to a first axis perpendicular to the longitudinal axis and varying according to a second axis perpendicular to the first axis.

Advantageously, the aperture of the diaphragm has an elliptical shape.

According to a particular characteristic, wherein the aperture of the diaphragm has a rectangular shape.

Advantageously, a size of the aperture of the diaphragm according to the first axis is a function of at least one parameter of the plenoptic camera, the at least one parameter belonging to a group of parameters comprising:

- a focal of the camera lens,
- a focal of the microlens array, and
- a pitch of the microlens array.

According to a specific characteristic, the size of the aperture of the diaphragm according to the first axis is equal to $\frac{F.\varnothing}{f}$, with F corresponding to the focal of the camera lens, Φ corresponding to the pitch of the microlens array and f corresponding to the focal of the microlens array.

Advantageously, the plenoptic camera further comprises a processor configured to control the aperture of the diaphragm.

The present disclosure also relates to a method of controlling an aperture of a diaphragm in a plenoptic camera, the plenoptic camera comprising a lens unit, a microlens array and a photosensors array, the microlens array comprising a plurality of cylindrical microlenses extending along a longitudinal axis, the lens unit comprising a camera lens and a diaphragm. The method comprises controlling the aperture of the diaphragm, the aperture of the diaphragm being constant according to a first axis perpendicular to the longitudinal axis and varying according to a second axis perpendicular to the first axis.

Advantageously, the aperture is controlled by a processor.

According to a specific characteristic, the aperture is controlled manually.

The present disclosure also relates to a telecommunication device comprising the plenoptic camera.

The present disclosure also relates to a computer program product comprising instructions of program code for executing at least a step of the method of controlling the aperture of the diaphragm in the plenoptic camera.

The present disclosure also relates to a non-transitory processor readable medium having stored therein instructions for causing a processor to perform at least a step of the method of controlling the aperture of the diaphragm in the plenoptic camera.

## 4. List of figures

The present disclosure will be better understood, and other specific features and advantages will emerge upon reading the following description, the description making reference to the annexed drawings wherein:

- figure 1 shows a plenoptic camera, according to a particular embodiment of the present principles;
- figure 2 shows the microlens array of the plenoptic camera of figure 1, according to a particular example of the present principles;
- figure 3 shows the iris diaphragm of the plenoptic camera of figure 1, according to a first example of the present principles;
- figure 4 shows the iris diaphragm of the plenoptic camera of figure 1, according to a second example of the present principles;
- figure 5 shows a method of controlling the opening of the iris diaphragm of the plenoptic camera of figure 1, according to a particular embodiment of the present principles;
- figure 6 shows a telecommunication device comprising the plenoptic camera of figure 1, according to a particular embodiment of the present principles.

## 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, a plenoptic camera comprises a microlens array comprising cylindrical microlenses that extend along a longitudinal axis, a photosensor array and a lens unit that comprises a camera lens (also called main lens or primary lens) and an iris diaphragm. The camera lens is associated with the iris diaphragm, the aperture of which being defined with a first value representative of the size of the aperture according to a first axis and a second value representative of the size of the aperture according to a second axis that is perpendicular to the first axis. The first axis is perpendicular to the longitudinal axis of the cylindrical microlenses, the first value is constant and the second value may vary to control the amount of light passing through the iris diaphragm before reaching the photosensor array.

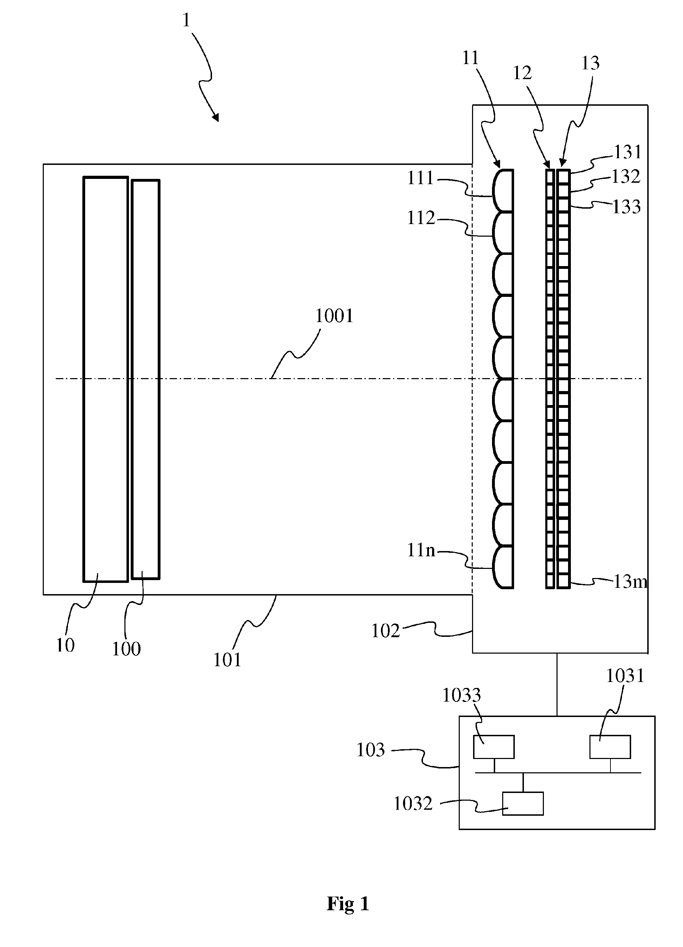

**Figure 1** shows a plenoptic camera 1 according to a particular embodiment of the present principles. The plenoptic camera comprises a lens unit 101 (corresponding to an optical assembly) and a camera body 102.

The lens unit 101 comprises a camera lens 10 and an iris diaphragm 100. The lens unit 101 is advantageously adapted to be associated with the camera body 102. For associating the lens unit 101 with the camera body 102, the lens unit 101 comprises a first attaching part (not shown) and the camera body 102 comprises a second attaching part (not shown), the first and second attaching parts being compatible with each other. Thanks to the first and second attaching parts, the lens unit 101 may be clipped onto the camera body 102 or the lens unit 101 may be screwed with the camera body 102. An example of such first and second attaching parts of a lens unit configured to be associated with a camera body may be found in the Japanese patent application JP2013-105151 A, which was published on May 30, 2013. The first and second attaching parts are configured in such a way that, once the lens unit 101 and the camera body 102 have been put together, the lens unit 101 and the camera body 102 form a plenoptic camera configured for acquiring multiple views of a scene at each acquisition of the scene. According to a variant, the lens unit 101 and the camera body 102 collectively form one single body and are assembled without being detachable.

The camera body 102 comprises a photosensors array 13, which comprises a plurality m of photosensors 131, 132, 133 to 13m. Each photosensor corresponds to a pixel of the raw image of the scene acquired with the photosensor array, with each pixel encompassing a part (also called a point) of the scene. For purposes of illustration, the photosensor array 13 is shown with a relative small number of photosensors 131 to 13m. Naturally, the number of photosensors is not limited by the illustration of figure 1 but extends to any number of photosensors, for example several thousand or several millions of photosensors. For example in a 12.4 megapixel camera, a pixel will correspond to a photosensor (e.g. corresponding to an array of 4088 x 3040 pixels / photosensors). A color filter array (CFA) 12 may be arranged on the photosensors array 13. The CFA 12 typically arranges RGB (Red, Green and Blue) color filters on the photosensor array 13, the RGB arrangement taking for example the form of a Bayer filter mosaic. According to a variant, a CFA is arranged on the microlens array 11, also called lenslet array, (in addition to the CFA 12 or in replacement of the CFA 12).

The camera body 102 also comprises a microlens array 11 comprising n cylindrical microlenses 111, 112 to 11n, n being an integer greater than or equal to 2. A group of photosensors of the photosensor array 13 are optically associated with each microlens 111 to 11n of the microlens array 11. For example, each microlens 111 to 11n of the microlens array 11 is sized to correspond to an array of 2x100, 4x1000 or 10x10000 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables it to acquire raw data representative of a pixel of the scene according to one position (acquisition of as many parallaxes as pixels).

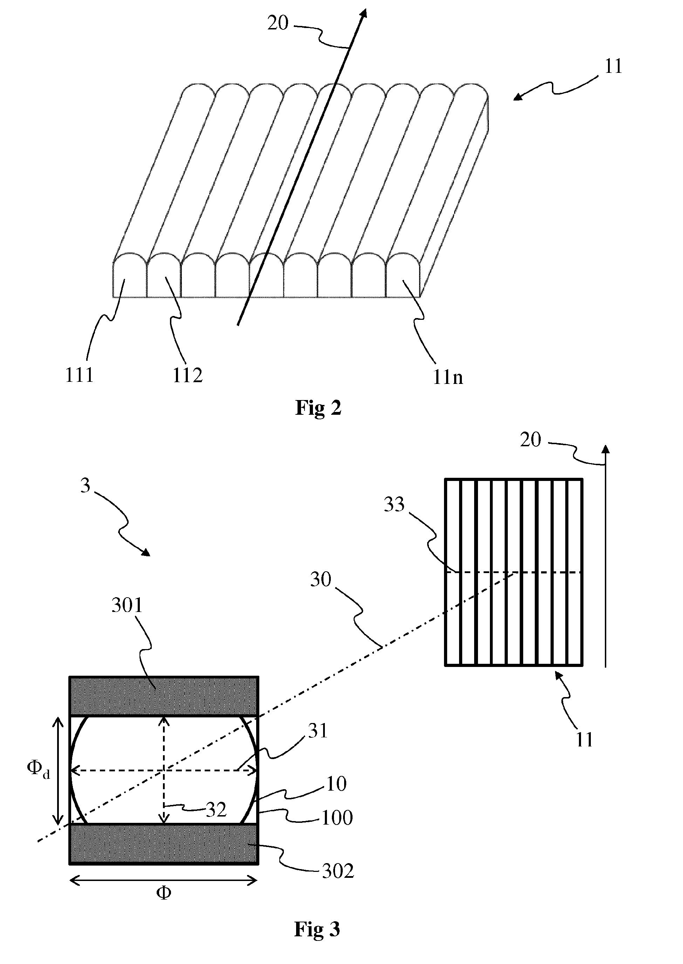

**Figure 2** shows an example of the microlens array 11. The microlens array 11 comprises a plurality of microlenses 111, 112 to 11 n. The lens surface of each microlens 111 to 11 n has a cylindrical, a semi-cylindrical shape or a more complex shape such as an aspherical shape. The microlenses are for example plano-convex, the plano-convex side of each microlens facing the camera lens 10, which enables to focus the light coming from the scene through the camera lens 10 and the iris diaphragm 100 onto the photosensor array 13. The microlens array 11 consists of lines of cylindrical or semi-cylindrical microlenses, each microlens extending along a longitudinal axis 20. The microlenses 111 to 11 n are parallel to each other and adjacent to each other. When the longitudinal axis 20 corresponds to the vertical axis of the photosensor array 13, the views of the scene that may be acquired with the plenoptic camera corresponds to horizontal views of the scene. When the longitudinal axis 20 corresponds to the horizontal axis of the photosensor array 13, the views of the scene that may be acquired with the plenoptic camera corresponds to vertical views of the scene. A set of parameters is associated with the microlens array 11, which set may be used to describe the microlens array. The latter set of parameters comprises for example:

- a size of the microlens array, for example 10 mm x 10 mm, 15 mm x 15 mm, 10 mm x 20 mm or 15 mm x 10 mm, mm standing for millimetre;
- a lenslet pitch of the microlens array, i.e. the distance between two microlenses, e.g. 0.10 mm, 0.25 mm, 0.50 mm, 1 mm, 2 mm or more than 2 mm; the pitch of the microlens array corresponds to the width of the microlenses (the width of a microlens being also called microlens pitch), the pitch may vary or not, depending on whether the width of the microlens varies or not from a microlens to another one;
- a number of microlenses, for example 5, 10, 20, 30, 40, 50, 100 or even more microlenses;
- a focal length that may be different from one microlens to another one, or that may be the same for all microlenses, e.g. 0.1 mm, 0.5 mm, 1.6 mm, 5.2 mm or 6.7 mm.

As described the lens unit 101 comprises a camera lens 10, also called a main lens or primary lens, which is advantageously formed of one or more lens elements, only one lens element 10 being depicted in figure 1 for clarity purpose. Also as described, he lens unit 101 further comprises an iris diaphragm 100. The iris diaphragm is for example arranged in the aperture stop plane of the camera lens 10, in the middle of the camera lens 10 or at the output of the camera lens 10. The iris diaphragm 10 has an opening/aperture (not shown), which is controllable to control the amount of light reaching the photosensor array 13. The aperture of the iris diaphragm 100 is such that the aperture size along its main axis (also called first axis) is a constant, the main axis being perpendicular to the longitudinal axis 20 of the microlens array 11. When the aperture size along the main axis corresponds to the diameter of the camera lens 10, each and every circular microlens receives light, which enables to acquire all views of the scene. The aperture size along the secondary axis (also called second axis) is controllable and may vary from a maximal value corresponding to the diameter of the camera lens 10 to a minimal value which may be for example 0 mm, 0.5 mm, 1 mm or a few millimetres. The secondary axis is perpendicular to the main axis, i.e. parallel to the longitudinal axis 20 of the microlens array 11. Controlling the aperture size of the iris diaphragm 100 by varying only the size of the aperture along the secondary axis and by keeping the size of the aperture along the main axis maximal enables to acquire all views of the scene while controlling the amount of light reaching the photosensor array 13. The mechanism of the iris diaphragm 100 corresponds for example to a set of arcuate leaves (for example 8, 9, 10, 11, 12 or more leaves) mounted on two rings by the way of studs fitting into holes formed in the first and second ring. The shape of the leaves is for example designed in such a way that the aperture of the iris diaphragm takes the shape of an ellipse. According to another example, the mechanism of the iris diaphragm 100 consists of two plates, for example an upper plate and a lower plate, movable in relation to each other. Each plate has for example the shape of a rectangle which enable to obtain an aperture of the iris diaphragm having a rectangular shape. According to another example, each plate has the shape of a half-ellipse which enable to obtain an aperture of the iris diaphragm having an elliptical shape.

The plenoptic camera 1 advantageously comprises an electronic system 103 configured to control the plenoptic camera 1, for example to control the aperture size of the iris diaphragm 100. The electronic system 103 may be comprised in the camera body 102 or in the lens unit 101. The electronic system 103 advantageously comprises one or several processors 1031 associated with a memory, for example a Random Access Memory or RAM 1032 comprising one or more registers. The memory stores instructions of one or more processes implementing the method of controlling the plenoptic camera 1 and/or the method of controlling the aperture of the iris diaphragm. According to a variant, the electronic system 103 takes the form of a programmable logical circuit of type FPGA (Field-Programmable Gate Array) for example, ASIC (Application-Specific Integrated Circuit) or a DSP (Digital Signal Processor). The electronic system 103 comprises a power source 1033 comprising for example a variable voltage source capable of controlling the iris diaphragm 100. The power source is advantageously controlled by the processor 1031. The electronic system 103 may also comprise an interface configured to receive and/or transmit data such as control parameters input by, for example, a user via a user interface to set the plenoptic camera 1 and/or the aperture of the iris diaphragm, the user interface being for example displayed on a display screen (for example a LCD or an OLED display) arranged for example on the camera body 102. The electronic system 103 can also receive and/or transmit data to and/or from sources remote from the plenoptic camera 1.

According to a variant, the electronic system 103 may comprise part of the plenoptic camera 1 but is connected to the plenoptic camera 1 via a wired connection (for example via USB (Universal Serial Bus)) or via a wireless connection (for example via Bluetooth, Wi-Fi or ZigBee). According to this variant, the electronic system 103 comprises a transmitter to exchange data with the plenoptic camera 1. According to this variant, the power source 1033 is comprised in the plenoptic camera 1.

The plenoptic camera 1 is equally of the type 1.0, corresponding to a plenoptic camera wherein the distance between the microlens array 11 and the photosensor array 13 is equal to the microlenses focal length, or of the type 2.0 otherwise (also called focused plenoptic camera).

**Figure 3** shows an exemplary embodiment of an arrangement 3 of a part of the plenoptic camera 1. The arrangement 3 shows an example of the position of the iris diaphragm 100 in relation to the camera lens 10 and the microlens array 11. The iris diaphragm 100 is aligned with the camera lens 10 and the microlens array 11 along the optical axis 30 of the plenoptic camera 1, i.e. the optical axis 30 passes through the center of the iris diaphragm 100, the optical center of the camera lens 10 and the centre of the microlens array 11.

The size of the aperture of the iris diaphragm 100 is fixed to $\Phi$ according to the first axis 31 and to $\Phi_d$ according to the second axis 32. The value of $\Phi_d$ may be tuned between 0 to $\Phi$, either by a user using and controlling the plenoptic camera 1 or automatically, for example when the amount of light reaching the photosensor array is controlled automatically. $\Phi$ corresponds for example to the diameter of the main lens 10 and/or to the width of the microlens array 11 (along the axis 33 which is perpendicular to the longitudinal axis 20) and/or to the width of the photosensor array. The first axis 31 is perpendicular to the longitudinal axis, i.e. the size of the aperture of the iris diaphragm is constant and maximal in the direction perpendicular to the cylindrical microlenses of the microlens array 11. The second axis 32 is perpendicular to the first axis, i.e. the size of the aperture of the iris diaphragm may be modified / controlled in the direction of the cylindrical microlenses of the microlens array 11, according to the longitudinal axis 20. The aperture of the iris diaphragm 100 is centered to the optical axis 30 of the camera lens 10. The iris diaphragm is set perpendicularly to the cylindrical microlenses to ensure that all pixels bellow the cylindrical lenses received a light flux whatever the aperture $\Phi_d$. The aperture of the iris diaphragm 100 is set for example to the fix value $\Phi = F\phi/f$ according to the first axis 31, wherein F corresponds to the focal length of the camera lens 10, f corresponds to the focal length of the cylindrical microlenses (or equivalently the focal length of the microlens array 11) and $\phi$ corresponds to the pitch of the microlens array 11. The aperture $\Phi_d$ is for example tuned manually or electronically to ensure a constant amount of photons hitting the photosensor array for a given pixel sensitivity. According to another example, the value of $\Phi$ is set to any number greater than $F\phi/f$.

The control of the value taken by $\Phi_d$ (which enables to control the area of the aperture of the iris diaphragm 100) may be obtained by translating up and down the rectangular plates 301 and 302. For example, to decrease the value of $\Phi_d$ the upper plate 301 may be moved down while the lower plate 302 may be moved up (for example over a same distance for both plates 301 and 302 or over a first distance for the upper plate 301 greater than a second distance for the lower plate 302, or inversely). To increase the value of $\Phi_d$, the upper plate 301 may be for example moved up while the lower plate 302 may be moved down (for example over a same distance for both plates 301 and 302 or over a first distance for the upper plate 301 greater than a second distance for the lower plate 302, or inversely).

Such an arrangement 3, a part of the light reaching the microlens array 11 and the photosensor array is blocked vertically, i.e. along the longitudinal axis 20 of the cylindrical microlenses. The amount of light exposing the photosensor array may be reduced, while the plenoptic views acquired horizontally are preserved. The rendering on an auto-stereoscopic display device may thus remain possible for example. In another embodiment, the iris diaphragm 100 blocks the light horizontally, preserving the vertical plenoptic views. According to this another embodiment, the plates 301 and 302 are rotated of 90° to the right or to the left and the microlens array 11 is also rotated of 90° to the right or to the left. More generally, the views that are preserved depend on the direction of the arrangement 3.

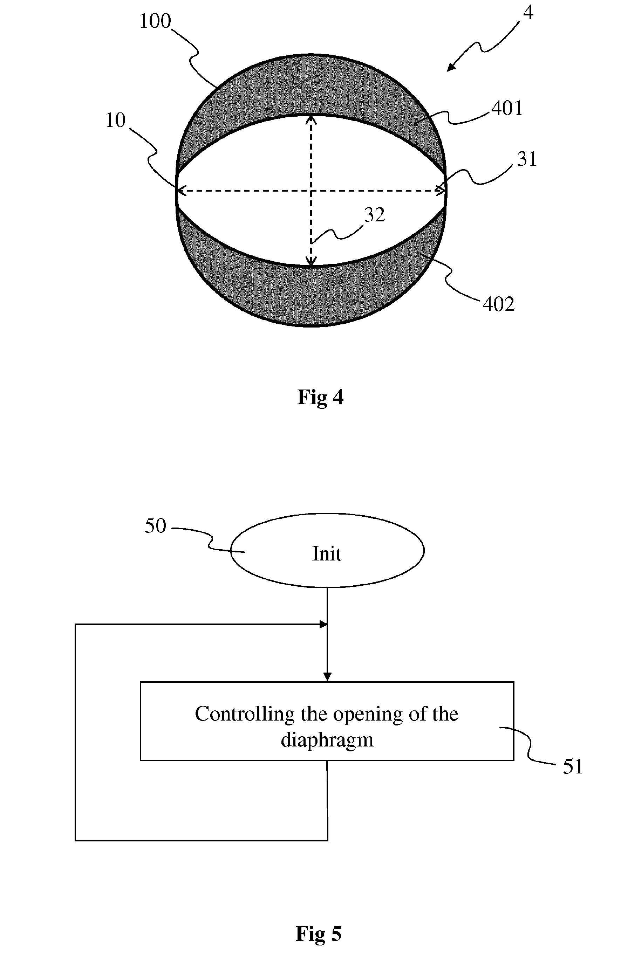

**Figure 4** shows an exemplary embodiment of an arrangement 4 of the iris diaphragm 100 and the camera lens 10 of the plenoptic camera 1. According to the non-limiting example of figure 4, the shape of the aperture of the iris diaphragm is elliptical while the shape of the aperture of the iris diaphragm in the arrangement 3 of figure 3 is rectangular. The upper part 401 of the iris diaphragm 100 blocking the light has for example the general shape of a crescent. The lower part 402 of the iris diaphragm 100 blocking the light has for example the general shape of a crescent but opposite to the upper part 401. The shape of the aperture of the iris diaphragm is for example obtained with rotating leaves or with plates having the form of a crescent and moving up and down as described with figure 3 for the plates 301 and 302.

**Figure 5** shows a method of controlling the aperture of an iris diaphragm in the plenoptic camera 1, according to a particular embodiment of the present principles.

During an initialisation step 50, the different parameters of the plenoptic camera, notably the parameters that may be used to control the aperture of the iris diaphragm 100 (e.g. size of the aperture, exposure time, light intensity reaching the photosensor array), are updated.

Then during a step 51, the size of the aperture according to a second axis of the iris diaphragm is controlled while the size of the aperture of the iris diaphragm according to the first axis is constant, the first axis and the second axis being perpendicular, the first axis being perpendicular to the longitudinal axis of the microlens array. The longitudinal axis corresponds to the main axis of the cylindrical microlenses forming the microlens array. The size of the aperture along the second axis is controlled either manually (for example by rotating a ring arranged on the camera lens of the plenoptic camera, the ring being in contact with the leaves of plates forming the iris diaphragm) or electronically, for example by the way of a processor controlling the aperture of the iris diaphragm, for example according to a determined value corresponding to a desired amount of light that should reach the photosensor array, a determined value of luminance of the images corresponding to the views acquired with the plenoptic camera and/or a determined value of exposure time when acquiring the images.

The size of the aperture of the iris diaphragm according to the first axis is for example a function of one or more parameters of the plenoptic camera, a non-exhaustive list of said parameters being:

- a focal length F of the camera lens (e.g. F = 80 mm and $\Phi$ = 40 mm);
- a focal length of the microlens array (e.g. f = 50 $\mu$m); and
- a pitch of the microlens array (e.g. $\phi$ = 25 $\mu$m such that it covers 5 pixels of 5 $\mu$m each of the photosensors array).

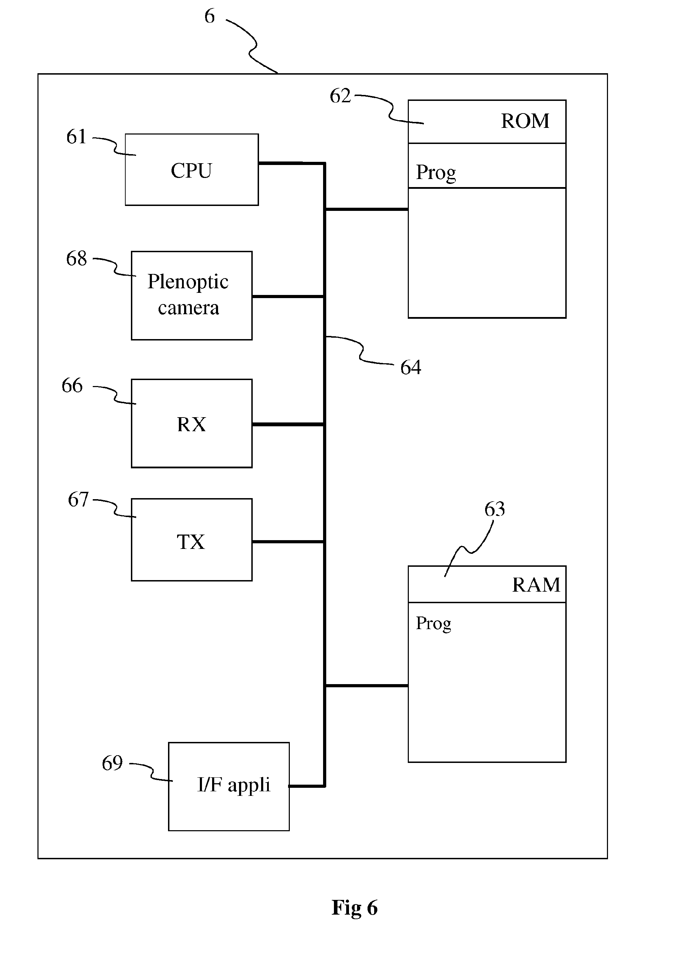

**Figure 6** diagrammatically illustrates an embodiment of a telecommunication device 6, corresponding for example to a smartphone or a tablet.

The telecommunication device 6 comprises the following elements, connected to each other by a bus 64 of addresses and data that also transports a clock signal:

- a microprocessor 61 (or CPU),
- a non-volatile memory of ROM (Read Only Memory) type 62,
- a Random Access Memory or RAM 63,
- a radio interface 66,
- an interface 67 adapted for the transmission of data,
- a plenoptic camera 68, corresponding for example to the plenoptic camera 1 of figure 1,
- an MMI interface 69 adapted for displaying information for a user and/or inputting data or parameters.

It is noted that the word "register" used in the description of memories 62 and 63 designates in each of the memories mentioned, a memory zone of low capacity as well as a memory zone of large capacity (enabling a whole programme to be stored or all or part of the data representing data received and decoded).

The memory ROM 62 comprises in particular a "prog" program.

The algorithms implementing the steps of the method specific to the present disclosure and described below are stored in the ROM 62 memory associated with the telecommunication device 6 implementing these steps. When powered up, the microprocessor 61 loads and runs the instructions of these algorithms.

The random access memory 63 notably comprises:

- in a register, the operating programme of the microprocessor 61 responsible for switching on the telecommunication device 6,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 66,
- decoded data formed to be transmitted at the interface to the application 69,
- parameters for controlling the aperture of the iris diaphragm 100.

Other structures of the telecommunication device 6 than those described with respect to figure 6 are compatible with the present disclosure. In particular, according to variants, the telecommunication device may be implemented according to a purely hardware realisation, for example in the form of a dedicated electronic system (for example in an ASIC (Application Specific Integrated Circuit) or FPGA (Field-Programmable Gate Array) or VLSI (Very Large Scale Integration) or of several electronic systems embedded in an apparatus or even in a form of a mix of hardware elements and software elements.

The radio interface 66 and the interface 67 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure being stored in the RAM.

Naturally, the present disclosure is not limited to the embodiments previously described.

In particular, the present disclosure is not limited to a plenoptic camera but also extends to any device integrating such a plenoptic camera.

Telecommunication devices includes, for example, smartphones, smartwatches, tablets, computers, mobile phones, portable/personal digital assistants ("PDAs"), and other devices that facilitate communication of information between end-users but also set-top-boxes.

The method and control operations of the plenoptic camera 1 and/or of the iris diaphragm 100 described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form a computer program tangibly embodied on a processor-readable medium for execution by a computer or the like. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A plenoptic camera (1) comprising a lens unit (101), a microlens array (11) and a photosensors array (13), the microlens array (11) comprising a plurality of cylindrical microlenses (111, 112, 11 n) extending along a longitudinal axis (20), the lens unit (101) comprising a camera lens (10), **characterized in that** the lens unit (101) further comprises a diaphragm (100), an aperture of the diaphragm (100) being constant according to a first axis (31) perpendicular to said longitudinal axis (20) and varying according to a second axis (32) perpendicular to said first axis (31).

2. The plenoptic camera according to claim 1, wherein the aperture of the diaphragm (100) has an elliptical shape.

3. The plenoptic camera according to claim 1, wherein the aperture of the diaphragm (100) has a rectangular shape.

4. The plenoptic camera according to one of claims 1 to 3, wherein a size of the aperture of the diaphragm (100) according to the first axis (31) is a function of at least one parameter of the plenoptic camera (1), said at least one parameter belonging to a group of parameters comprising:

   - a focal length of the camera lens,
   - a focal length of the microlens array, and
   - a pitch of the microlens array.

5. The plenoptic camera according to claim 4, wherein the size of the aperture of the diaphragm (100) according to the first axis (31) is equal to $\frac{F.\emptyset}{f}$, with F corresponding to the focal of the camera lens, $\Phi$ corresponding to the pitch of the microlens array and f corresponding to the focal of the microlens array.

6. The plenoptic camera according to one of claims 1 to 5, further comprising a processor (1031) configured to control the aperture of the diaphragm (100).

7. A method of controlling an aperture of a diaphragm in a plenoptic camera, the plenoptic camera comprising a lens unit, a microlens array and a photosensors array, the microlens array comprising a plurality of cylindrical microlenses extending along a longitudinal axis, the lens unit comprising a camera lens and a diaphragm, **characterized in that** the method comprises controlling (51) the aperture of the diaphragm, the aperture of the diaphragm being constant according to a first axis perpendicular to said longitudinal axis and varying according to a second axis perpendicular to said first axis.

8. The method according to claim 7, wherein the aperture of the diaphragm has an elliptical shape.

9. The method according to claim 7, wherein the aperture of the diaphragm has a rectangular shape.

10. The method according to one of claims 7 to 9, wherein a size of the aperture of the diaphragm according to the first axis is a function of at least one parameter of the plenoptic camera, said at least one parameter belonging to a group of parameters comprising:

   - a focal length of the camera lens,
   - a focal length of the microlens array, and
   - a pitch of the microlens array.

11. The method according to claim 10, wherein the size of the aperture of the diaphragm according to the first axis is equal to $\frac{F.\emptyset}{f}$, with F corresponding to the focal of the camera lens, $\Phi$ corresponding to the pitch of the microlens array and f corresponding to the focal of the microlens array.

12. The method according to one of claims 7 to 11, wherein the aperture is controlled by a processor.

13. The method according to one of claims 7 to 11, wherein the aperture is controlled manually.

14. A computer program product comprising instructions of program code for executing the method according to any one of claims 7 to 13, when said program is executed on a computer.

15. A multimedia terminal comprising the plenoptic camera according to one of the claims 1 to 6.

**Fig 1**

**Fig 2**

**Fig 3**

100

4

401

10

31

32

402

**Fig 4**

50

Init

Controlling the opening of the
diaphragm

51

**Fig 5**

6

62

ROM

Prog

61

CPU

68

Plenoptic
camera

64

66

RX

67

TX

63

RAM

Prog

69

I/F appli

**Fig 6**

Europäisches
Patentamt

European
Patent Office

Office européen
des brevets

# EUROPEAN SEARCH REPORT

**Application Number**

EP 15 30 6658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2009 290268 A (SONY CORP) 10 December 2009 (2009-12-10) * paragraph [0008] - paragraph [0010] * * paragraph [0012] - paragraph [0040] * * figures 1-8A * | 1-15 | INV. H04N5/225 H04N5/238 G02B3/00 |
| Y | JP 2009 244662 A (SHARP KK) 22 October 2009 (2009-10-22) * paragraph [0022] - paragraph [0025] * * paragraph [0028] - paragraph [0051] * * paragraph [0058] * * figures 5-8c * | 1-15 | |
| Y | US 2013/286188 A1 (FOLEY ANDREW M [US] ET AL) 31 October 2013 (2013-10-31) * paragraph [0041] * * paragraph [0044] * * figures 1,5A-8D * | 2,8 | |
| A | CN 104 580 877 A (HUAWEI TECH CO LTD) 29 April 2015 (2015-04-29) * paragraph [0028] - paragraph [0047] * * figures 1-3 * & EP 2 963 914 A1 (HUAWEI TECH CO LTD [CN]) 6 January 2016 (2016-01-06) * used as a translation * | 1-15 | |
| A | WO 2015/100301 A1 (YU JINGYI [US]; GUO XINQING [US]; YU ZHAN [US]) 2 July 2015 (2015-07-02) * paragraph [0005] * * paragraph [0026] * * paragraph [0031] * * paragraph [0043] - paragraph [0046] * * figures 1-2c * | 1,3,4,7, 9,10,14, 15 | |

**TECHNICAL FIELDS SEARCHED (IPC)**

H04N
G02B

-/--

The present search report has been drawn up for all claims

| Place of search | Date of completion of the search | Examiner |
|---|---|---|
| The Hague | 14 April 2016 | Rocca, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 30 6658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 398 224 A1 (UNIV LELAND STANFORD JUNIOR [US]) 21 December 2011 (2011-12-21) * paragraph [0040] * * figure 1 * ----- | 1-15 | |
| A | US 2014/184885 A1 (TANAKA EIICHI [JP] ET AL) 3 July 2014 (2014-07-03) * paragraph [0020] - paragraph [0035] * * figures 1-2B * ----- | 1-15 | |

TECHNICAL FIELDS
SEARCHED     (IPC)

The present search report has been drawn up for all claims

| Place of search | Date of completion of the search | Examiner |
|---|---|---|
| The Hague | 14 April 2016 | Rocca, Delphine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

   .........................................................................
& : member of the same patent family, corresponding
    document

EPO FORM 1503 03.82 (P04C01)

EP 3 157 244 A1

## ANNEX TO THE EUROPEAN SEARCH REPORT
## ON EUROPEAN PATENT APPLICATION NO.

EP 15 30 6658

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2016

| Patent document cited in search report | | Publication date | Patent family member(s) | | Publication date |
|---|---|---|---|---|---|
| JP 2009290268 | A | 10-12-2009 | NONE | | |
| JP 2009244662 | A | 22-10-2009 | NONE | | |
| US 2013286188 | A1 | 31-10-2013 | NONE | | |
| CN 104580877 | A | 29-04-2015 | CN | 104580877 A | 29-04-2015 |
| | | | EP | 2963914 A1 | 06-01-2016 |
| | | | US | 2015358531 A1 | 10-12-2015 |
| | | | WO | 2015062215 A1 | 07-05-2015 |
| WO 2015100301 | A1 | 02-07-2015 | NONE | | |
| EP 2398224 | A1 | 21-12-2011 | EP | 1795004 A2 | 13-06-2007 |
| | | | EP | 2398223 A1 | 21-12-2011 |
| | | | EP | 2398224 A1 | 21-12-2011 |
| | | | HK | 1105334 A1 | 31-07-2015 |
| | | | HK | 1163995 A1 | 27-06-2014 |
| | | | JP | 4752031 B2 | 17-08-2011 |
| | | | JP | 2008515110 A | 08-05-2008 |
| | | | KR | 20070057998 A | 07-06-2007 |
| | | | US | 2007252074 A1 | 01-11-2007 |
| | | | US | 2012019711 A1 | 26-01-2012 |
| | | | US | 2012019712 A1 | 26-01-2012 |
| | | | US | 2012300097 A1 | 29-11-2012 |
| | | | US | 2013033626 A1 | 07-02-2013 |
| | | | US | 2013169855 A1 | 04-07-2013 |
| | | | US | 2014028892 A1 | 30-01-2014 |
| | | | US | 2014049663 A1 | 20-02-2014 |
| | | | US | 2014204184 A1 | 24-07-2014 |
| | | | US | 2015029388 A1 | 29-01-2015 |
| | | | US | 2015156402 A1 | 04-06-2015 |
| | | | US | 2015326848 A1 | 12-11-2015 |
| | | | WO | 2006039486 A2 | 13-04-2006 |
| US 2014184885 | A1 | 03-07-2014 | JP | 2014130277 A | 10-07-2014 |
| | | | US | 2014184885 A1 | 03-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013105151 A